# EUROPÄISCHE PATENTSCHRIFT

(11) **EP 1 621 407 B1**
(45) Veröffentlichungstag und Bekanntmachung des Hinweises auf die Patenterteilung: **27.12.2006**
(21) Anmeldenummer: 05016326.0
(22) Anmeldetag: 27.07.2005
(51) Int. Cl.: B60R 13/04

(54) **Verbindungsclip für ein Zierelement eines Kraftfahrzeugs**
Connection clip for a vehicle trim element
Clip de raccordement pour un élément décoratif de véhicule

(30) Priorität: 30.07.2004 DE 102004037185
(43) Veröffentlichungstag der Anmeldung: 01.02.2006
(73) Patentinhaber: DURA Automotive Plettenberg Entwicklungs- und Vertriebs GmbH, 58840 Plettenberg (DE)
(72) Erfinder: Schneider, Frank, 58762 Altena (DE); Schulte, Carsten, 57413 Finnentrop (DE)
(74) Vertreter: Zinnecker, Armin

(56) Entgegenhaltungen:
- US-A- 5 352 010
- US-A- 5 358 764
- US-A- 5 451 090

## Beschreibung

Die Erfindung betrifft einen Clip zur Verbindung einer Kraftfahrzeug-Seitenscheibe mit einem Bauteil, vorzugsweise einem Zierelement. Bei dem Zierelement kann es sich um eine Zierleiste handeln, insbesondere die "Leiste Brüstung", also die eine Brüstung der Karosserie abdeckende Zierleiste.

Aus der WO 98/24649 ist es bekannt, eine Glasscheibe mit der Karosserie eines Kraftfahrzeugs durch Halteteile aus Kunststoff zu verbinden, die mit Verankerungselementen ausgerüstet sind.

Die DE 101 46 628 A1 offenbart eine Dichtungsanordnung zum Abdichten des Fensterschachts eines Kraftfahrzeugs, bei der eine Zierleiste mit einem Dichtungsprofil verbunden ist. Um eine gleichmäßig erscheinende Kontur des Spalts zwischen der Zierleiste und einem angrenzenden Karosserieblech zu erzielen, ist in dem Spalt ein Ausgleichsprofil angeordnet, das an der Zierleiste befestigt ist.

Weitere ähnliche Clips sind aus der DE 34 13 003 C2, der GB 20 047 725 A und der US 5 732 998 A bekannt.

Die US-A-5 358 764 offenbart ein Verbindungsteil zur Verbindung einer Kraftfahrzeugscheibe mit einem Zierelement. Das Verbindungsteil weist Rastnasen auf, an denen das Zierelement befestigbar ist.

Die US-A-5 352 010 und 5 451 090 zeigen ähnliche Verbindungselemente.

Aufgabe der Erfindung ist es, einen verbesserten Clip der eingangs angegebenen Art vorzuschlagen.

Erfindungsgemäß wird diese Aufgabe dadurch gelöst, daß der Clip Rastnasen aufweist, an denen das Bauteil befestigbar ist. Der Clip ist vorzugsweise aus Kunststoff hergestellt, insbesondere aus einem hochtemperaturbeständigen und/oder formbeständigen Kunststoff. Durch die Verwendung eines aus Kunststoff hergestellten Clips können mehrere Funktionen in einem Bauteil zusammengefaßt werden, was bei der Verwendung von Clips aus Metall nicht möglich ist. Durch die Erfindung wird es ferner ermöglicht, eine geringe Bauhöhe des Clips zu realisieren.

Eine Rastnase des Clips ist eindrückbar. Hierdurch kann das Bauteil gelöst werden. Vorteilhaft ist es, wenn ein Anschlag zur Begrenzung des Eindrückwegs der Rastnase vorhanden ist. Der durch den Anschlag begrenzte maximale Eindrückweg der Rastnase ist derart bemessen, daß die Rastnase nicht zerstört werden kann. Durch den Anschlag kann also ein Überdrücken der Rastnase und somit deren Zerstörung verhindert werden.

Vorteilhafte Weiterbildungen sind in den Unteransprüchen beschrieben.

Vorzugsweise ist das Bauteil an dem Clip lösbar befestigbar. Das Bauteil kann dann bei Bedarf demontiert werden. Auch eine mehrmalige Montage und Demontage des Bauteils ist möglich.

Vorteilhaft ist es, wenn der Clip an der Seitenscheibe befestigbar ist. Vorzugsweise ist der Clip an der Innenseite der Seitenscheibe befestigbar. Die Befestigungsstelle befindet sich vorzugsweise zwischen der Seitenscheibe und einem Karosserieteil. Vorteilhaft ist es, wenn der Clip mit der Seitenscheibe verklebbar ist. Die Verklebung kann durch ein Klebeband erfolgen. Der Clip kann allerdings auch auf andere Weise an der Seitenscheibe befestigt sein. Insbesondere kann er mechanisch befestigt sein. Eine weitere Möglichkeit besteht darin, einen Rahmen für die Seitenscheibe durch Umspritzen der Seitenscheibe herzustellen und den Clip dabei mit zu umspritzen.

Nach einer weiteren vorteilhaften Weiterbildung weist der Clip Anschläge für die Seitenscheibe und/oder für einen Rahmen der Seitenscheibe auf.

Der Clip kann federnde Anschläge für die Karosserie aufweisen. Vorzugsweise handelt es sich um nach außen federnde Anschläge. Die Anschläge sind vorzugsweise im Bereich der Verklebung mit der Seitenscheibe vorgesehen. Durch die nach außen federnden Anschläge kann gewährleistet werden, daß der Clip immer an der Karosserie anliegt und Toleranzen überbrückt werden können.

Vorteilhaft ist es, wenn der Clip im Bereich der Rastnasen insbesondere federnd vorgespannt ist. Dadurch kann gewährleistet werden, daß der Clip das Bauteil bzw. Zierteil in Richtung zur Karosserie zieht, wodurch eine spaltfreie Montage der Bauteile bzw. Zierteile gewährleistet werden kann.

Vorzugsweise bildet das Bauteil eine Verlängerung der Scheibe. Dies ist insbesondere dann vorteilhaft, wenn das Bauteil ein Zierelement, insbesondere eine Zierleiste, insbesondere im Bereich der Brüstung der Karosserie, ist. Der Clip und/oder das Bauteil können derart ausgestaltet sein, daß das Bauteil im montierten Zustand einen vorzugsweise flachen Winkel zur Scheibe bildet. Vorteilhaft ist es, wenn das Bauteil, insbesondere dessen Oberfläche, im wesentlichen parallel zum Blech der Brüstung der Karosserie verläuft. Dadurch, daß das Bauteil eine Verlängerung der Scheibe bildet, kann der Abstand des Bauteils von dem Blech der Karosserie gering gehalten werden.

Die Erfindung betrifft ferner eine Kraftfahrzeug-Seitenscheibe mit einem Rahmen, die durch einen erfindungsgemäßen Clip gekennzeichnet ist.

Der Rahmen ist vorzugsweise durch eine Umspritzung der Seitenscheibe hergestellt. Er kann allerdings auch durch eine Umschäumung der Seitenscheibe oder auf andere Weise hergestellt sein.

Vorzugsweise weist der Rahmen Freimachungen für den Clip auf. Die Anordnung kann derart getroffen sein, daß der Clip durch eine Freimachung im Rahmen hindurchtaucht. Er kann auf einer Seite mit der Seitenscheibe verbunden, insbesondere verklebt werden und auf der anderen Seite über die Rastnasen das Bauteil bzw.

Zierelement aufnehmen. Der Clip kann auf diese Weise komplett in den Rahmen bzw. die Umspritzung der Seitenscheibe integriert werden. Es ist kein zusätzlicher Bauraum für den Clip erforderlich, und es kann eine sehr geringe Bauhöhe realisiert werden.

Der Rahmen kann Ausnehmungen für Anschläge des Clips aufweisen. Auf diese Weise kann eine genaue Position des Clips zum Rahmen und damit auch zur Seitenscheibe gewährleistet werden.

Eine weitere vorteilhafte Weiterbildung der Kraftfahrzeug-Seitenscheibe ist gekennzeichnet durch ein Bauteil, vorzugsweise ein Zierelement, insbesondere eine Zierleiste, z.B. die "Leiste Brüstung". Vorteilhaft ist es, wenn der Rahmen unter dem Bauteil hindurchgeführt ist. Vorzugsweise ist an dem Rahmen ein Anschlag für das Bauteil vorgesehen. Das Bauteil liegt an dem Anschlag des Rahmens an, wodurch ein optisch einwandfreies Aussehen erreicht werden kann.

Ein Ausführungsbeispiel der Erfindung wird nachstehend anhand der beigefügten Zeichnung im einzelnen erläutert. In der Zeichnung zeigt
- Fig. 1: eine Seitenscheibe eines Kraftfahrzeugs mit vier Clips sowie einer vergrößerten Darstellung eines Clips,
- Fig. 2: den Clip gemäß Fig. 1 in einer vergrößerten perspektivischen Darstellung,

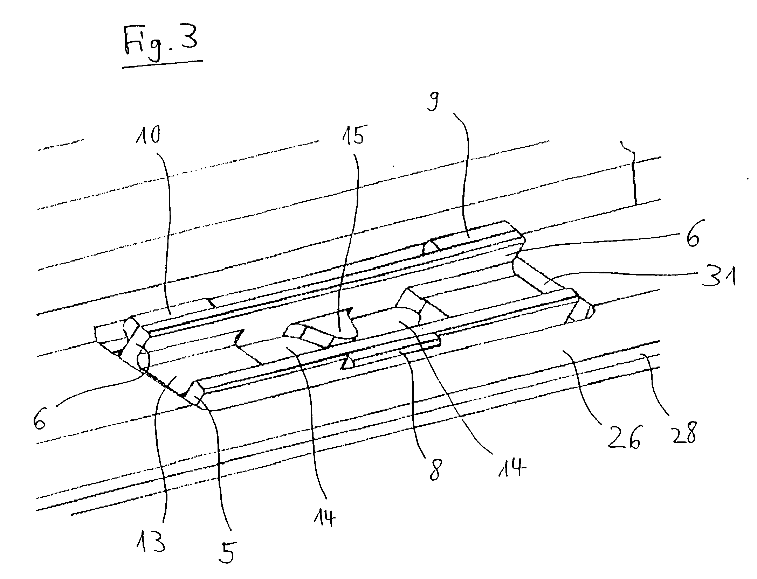

- Fig. 3: den Clip gemäß Fig. 1 und 2 in der Einbausituation in einem umspritzten Rahmen einer Seitenscheibe,
- Fig. 4: eine der Fig. 3 entsprechende Darstellung mit einer Zierleiste, die teilweise an dem Clip befestigt ist,
- Fig. 5: den Clip gemäß Fig. 1 bis 4 in einer Ansicht von vorne,
- Fig. 6: den Clip gemäß Fig. 1 bis 5 in der Einbausituation mit einer Kraftfahrzeug-Seitenscheibe, einem umspritzten Rahmen, einer Zierleiste und einem Teil der Karosserie in einem Querschnitt,
- Fig. 7: eine der Fig. 6 entsprechende Darstellung eines Querschnitts zwischen zwei benachbarten Clips und
- Fig. 8: den Clip der Figuren 1 bis 7 im entspannten Zustand in einer der Fig. 6 entsprechenden Darstellung.

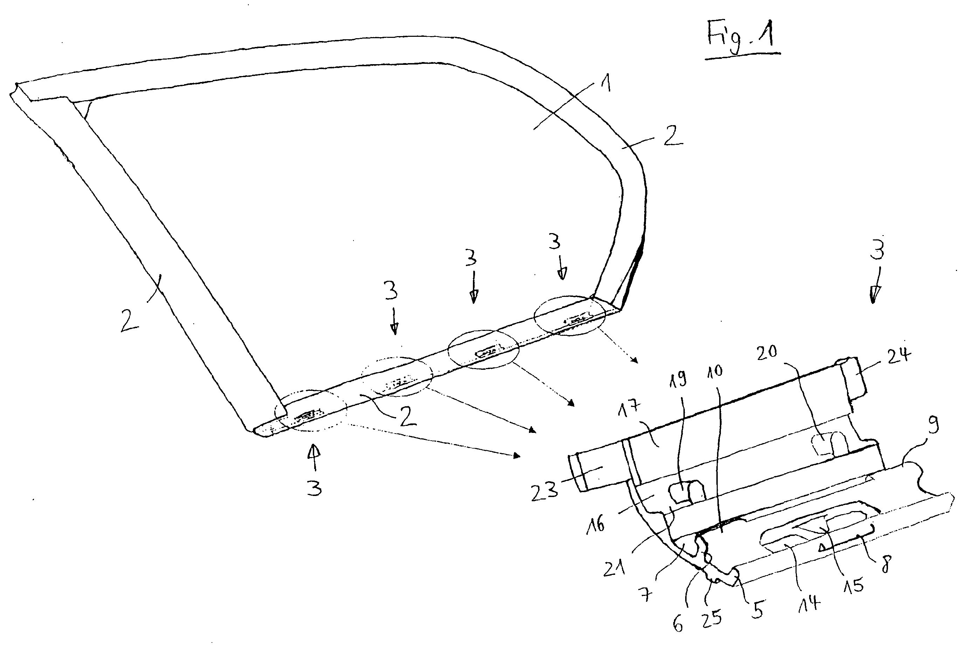

Die in Fig. 1 gezeigte Kraftfahrzeug-Seitenscheibe 1 weist einen umlaufenden Rahmen 2 auf, der durch eine Umspritzung der Seitenscheibe 1 hergestellt ist. Am unteren Rand der Seitenscheibe 1 sind in dem Rahmen 2 vier Clips 3 vorgesehen, die im wesentlichen auf einer Linie liegen und voneinander beabstandet sind.

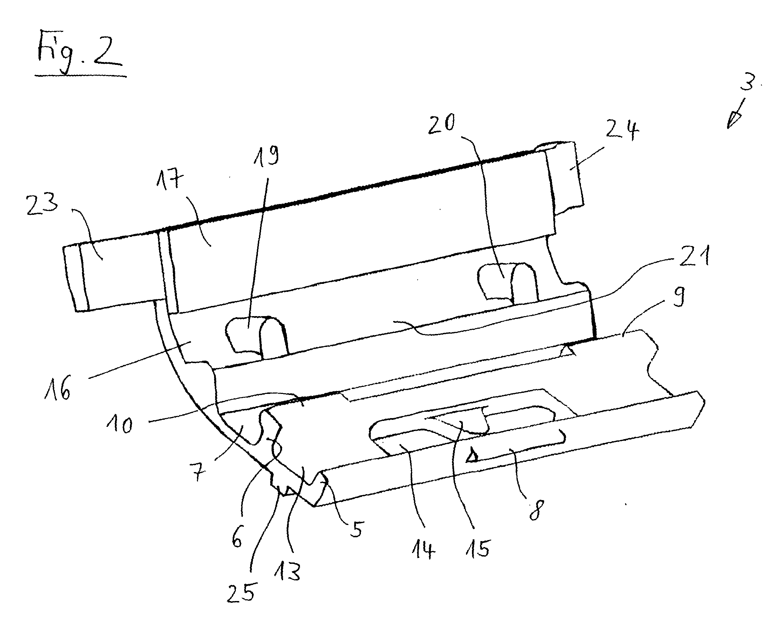

Der auch in Fig. 2 gezeigte Clip 3 dient zur Verbindung der Kraftfahrzeug-Seitenscheibe 1 mit einem Bauteil, nämlich einer Zierleiste 4. Hierfür weist der Clip ein U-förmiges Teil mit einer Basis 13 und im wesentlichen rechtwinklig nach oben ragenden Schenkeln 5, 6 auf. Die Basis 13 fluchtet mit der Grundfläche 7 des Clips 3. In der Mitte des äußeren Schenkels 5 ist an dessen oberem Ende eine nach außen weisende Rastnase 8 vorgesehen, die sich über etwa ein Fünftel der Länge des Schenkels 5 erstreckt. An den Enden des inneren Schenkels 6 ist an dessen oberem Ende jeweils eine weitere, nach innen weisende Rastnase 9, 10 vorgesehen. Die Länge jeder Rastnase 9, 10 beträgt ebenfalls etwa ein Fünftel der Länge des Schenkels 6. Die Rastnasen 8 und 9 einerseits und 10 andererseits weisen voneinander weg. Sie sind in der erläuterten Weise gegeneinander versetzt.

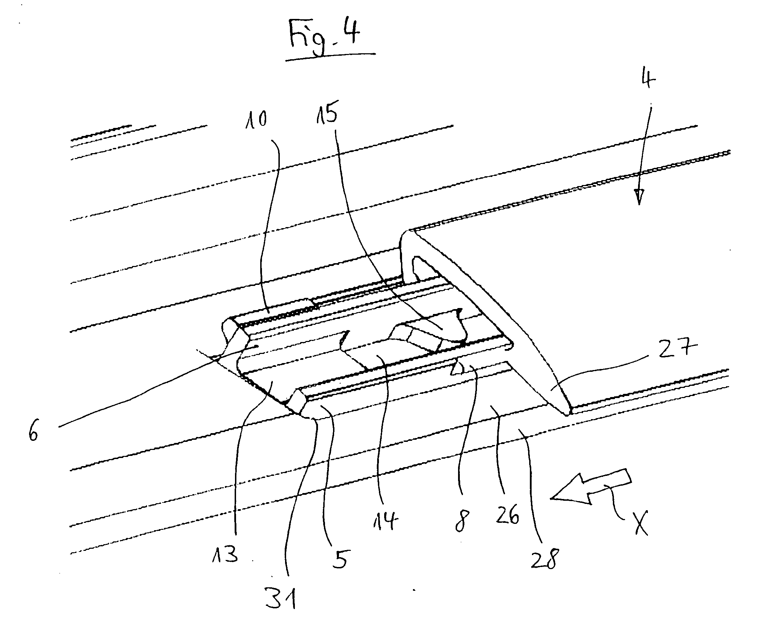

Die Zierleiste 4 weist einander gegenüberliegende Nuten 11, 12 auf, deren Abstand dem Abstand der Rastnasen 8 und 9, 10 entspricht, so daß die Zierleiste 4 in der aus Fig. 4, 6 und 8 ersichtlichen Weise in Längsrichtung X (Fig. 4) auf das U-förmige Teil des Clips 3 aufgeschoben werden kann.

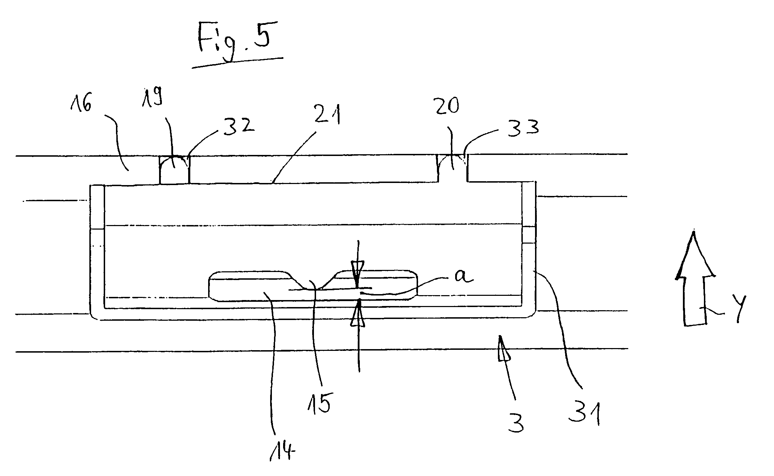

Die Verrastung zwischen den Rastnasen 8, 9, 10 und den Nuten 11, 12 kann allerdings auch auf andere Weise hergestellt und gelöst werden. Hierzu ist in der Basis 13 des U-förmigen Teils eine zentrale Ausnehmung 14 vorgesehen, die sich über etwa die Hälfte der Länge des U-förmigen Teils erstreckt. Sie liegt zwischen den Schenkeln 5 und 6, an die sie jeweils angrenzt. Die Ausnehmung 14 ermöglicht eine Auslenkung des die Rastnase 8 tragenden Schenkels 5 in Richtung Y (Fig. 5) nach innen. In der Mitte der Innenseite der Ausnehmung 14 ist ein Anschlag 15 zur Begrenzung des Eindrückwegs des Schenkels 5 und der Rastnase 8 in Y-Richtung nach innen vorgesehen, der von dem Schenkel 6 weg zur Rastnase 8 hin gerichtet ist und der sich in die Ausnehmung 14 hinein erstreckt. Der Abstand a zwischen dem Ende des Anschlags 15 und der Innenseite des Schenkels 5 ist derart bemessen, daß die Nut 11 der Zierleiste 4 bei einem vollständigen Eindrücken des Schenkels 5 in die Rastnase 8 einrasten kann oder von der Rastnase 8 freigegeben wird, so daß die Zierleiste 4 nach unten eingeführt oder nach oben abgehoben werden kann, daß durch diesen Eindrückweg aber der Schenkel 5 nicht zerstört wird. Auf diese Weise ist die Zierleiste 4 an dem Clip 3 lösbar befestigbar.

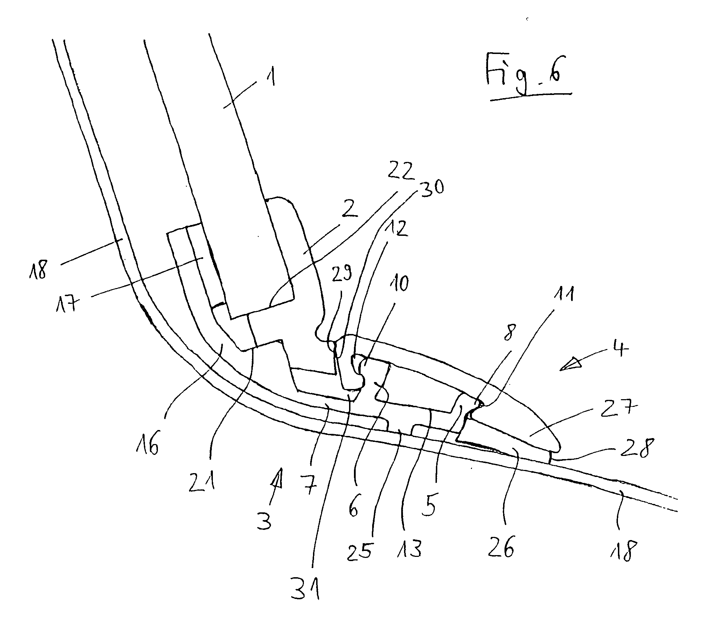

Der Clip 3 weist an seinem dem U-förmigen Teil abgewandten Ende eine Befestigungsfläche 16 auf, die gegenüber der Grundfläche 7 in einem vorzugsweise flachen Winkel und/oder gekrümmt verläuft. Auf der Innenseite der Befestigungsfläche 16 ist ein im wesentlichen rechteckiges, doppelt wirkendes Klebeband 17 vorgesehen, durch das die Befestigungsfläche 16 und mit ihr der Clip 3 mit der Innenseite der Seitenscheibe 1 verklebbar ist, wie in Fig. 6 bis 8 dargestellt. Diese Verklebung befindet sich zwischen der Seitenscheibe 1 im Bereich ihres unteren Randes und einem Blech 18 der Karosserie des Kraftfahrzeugs.

Die Befestigungsfläche 16, die Grundfläche 7 und die Basis 13 des Clips 3 liegen im wesentlichen nebeneinander. Dadurch kann der Clip 3 sehr flach ausgebildet werden. Die im Bereich der Basis 13 vorgesehenen Schenkel 5, 6 und damit auch die Zierleiste 4 liegen auf diese Weise neben der Grundfläche 7. Der Clip 3 ist dadurch besonders gut zur Verwendung im Bereich der Brüstung der Karosserie geeignet. Die Brüstung bezeichnet dabei den Bereich der Karosserie, der durch das Blech 18 gebildet wird und der sich an die Unterkante 22 der Scheibe 1 anschließt. Dieser Bereich verläuft in einem vorzugsweise flachen Winkel zur Scheibe 1. Die Grundfläche 7, die Basis 13 und die Zierleiste 4 verlaufen in einem im wesentlichen entsprechenden Winkel zur Scheibe 1. Auf diese Weise kann die Zierleiste 4 im Bereich der Brüstung an die Unterkante 22 der Scheibe 1 und deren Rahmen 2 anschließend vorgesehen werden. Sie bildet eine Verlängerung der Scheibe 1 und des Rahmens 2. Dabei kann sie in einer geringen Bauhöhe über der Brüstung realisiert werden, was insbesondere unter optischen Gesichtspunkten vorteilhaft ist.

Der Clip 3 weist ferner Anschläge 19, 20 auf, die unterhalb des Klebebandes 17 liegen und die voneinander beabstandet sind. Sie befinden sich auf der Oberfläche einer Podestfläche 21 und weisen an ihrer Oberseite einen halbkreisförmigen Querschnitt auf. In der Einbausituation gemäß Fig. 6 bis 8 liegen die Oberkanten der Anschläge 19, 20 an der Unterkante 22 der Seitenscheibe 1 an. Die Anschläge 19, 20 sind also Anschläge für die Seitenscheibe 1.

Der Clip 3 weist ferner federnde Anschläge 23, 24 für das Blech 18 der Karosserie auf. Die federnden Anschläge 23, 24 liegen im Bereich des Klebebandes 17. Sie weisen in die dem Klebeband 17 entgegengesetzte Richtung der Befestigungsfläche 16, also nach hinten in Richtung zum Blech 18 der Karosserie. Der Abstand ihrer Endpunkte von der Ebene der Befestigungsfläche 16 ist größer als der Abstand des Blechs 18 von dieser Befestigungsfläche 16, so daß die federnden Anschläge 23, 24 das Klebeband 17 in der Einbausituation gegen die Innenseite der Seitenscheibe 1 drücken und Toleranzen ausgeglichen werden können.

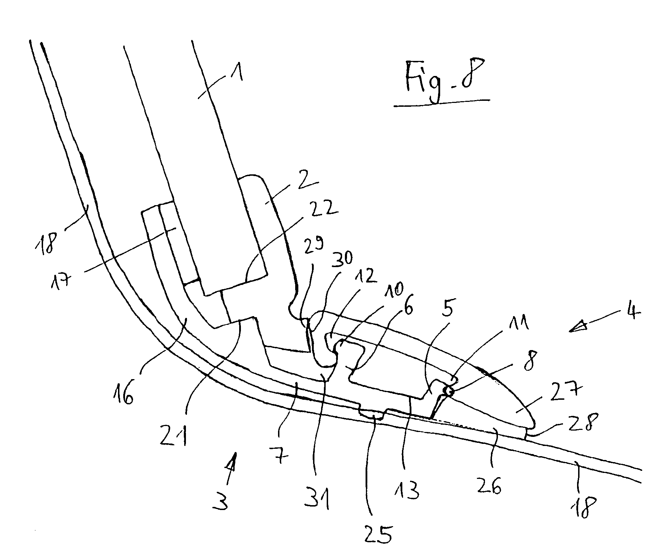

Der Clip 3 ist im Bereich der Rastnasen 8, 9, 10 vorgespannt. In Fig. 8 ist der Clip 3 in der entspannten Ausgangslage dargestellt. Hier ragt eine auf der Unterseite der Basis 13 des U-förmigen Teils vorgesehene Anschlagleiste 25 über das Blech 18 hinaus. In der Einbausituation liegt die Anschlagleiste 25 unter Vorspannung auf dem Blech 18 auf, wie in Fig. 6 gezeigt. Der Clip 3 ist also in diesem Bereich in Richtung zur Zierleiste 4 hin federnd vorgespannt.

Der umspritzte Rahmen 2 weist Freimachungen 31 für die Clips 3 auf. Im Bereich der Clips 3 ist der Rahmen 2 durch diese Freimachungen 31 unterbrochen. Die Clips 3 liegen in den Freimachungen 31. Sie tauchen bei den Freimachungen 31 durch den Rahmen 2 hindurch.

Der Rahmen 2 ist unter der Zierleiste 4 hindurchgeführt. Er weist einen äußeren Endbereich 26 auf, der zwischen dem Blech 18 und der Unterseite des äußeren Endbereichs 27 der Zierleiste 4 liegt. Das äußere Ende 28 des äußeren Endbereichs 26 schließt im wesentlichen bündig mit dem äußeren Ende des äußeren Endbereichs 27 ab.

Der Rahmen 2 weist ferner einen Anschlag 29 für den inneren Endbereich 30 der Zierleiste 4 auf. Der inneren Endbereich 30 umgibt die Nut 12. Er liegt in der Einbausituation gemäß Fig. 6 bis 8 an dem Anschlag 29 an.

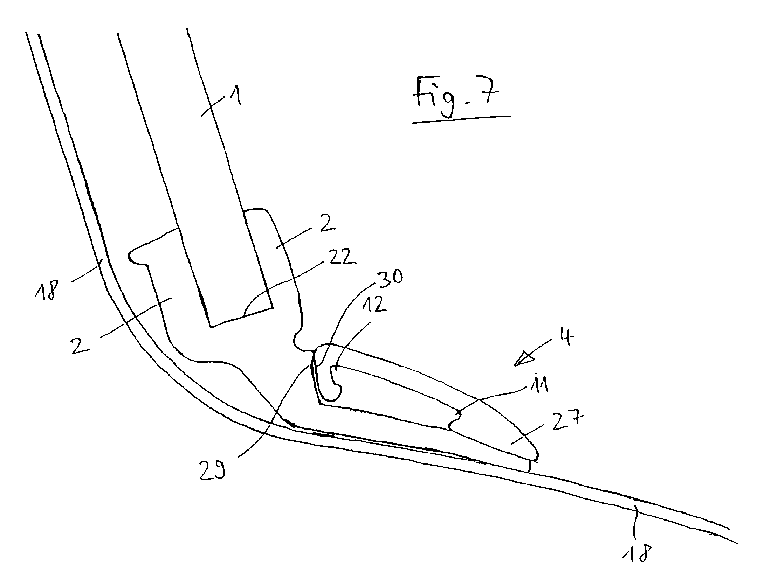

Fig. 7 zeigt einen Querschnitt durch den Bereich zwischen zwei benachbarten Clips 3.

An den Rändern der Freimachungen 31 in dem Rahmen 2 sind Ausnehmungen 32, 33 vorgesehen, in denen die Anschläge 19, 20 des Clips 3 zu liegen kommen (Fig. 5). Auf diese Weise ist die Lage der Clips 3 in dem Rahmen 2 definiert und festgelegt.

Die Scheibe 1 mit dem Rahmen 2, der Clip 3 und gegebenenfalls die Zierleiste 4 können als vormontierte Einheit hergestellt werden. Diese vormontierte Einheit kann in die Fahrzeug-Karosserie eingebaut werden.

## Patentansprüche

1. Clip zur Verbindung einer Kraftfahrzeug-Seitenscheibe (1) mit einem Bauteil (4), vorzugsweise einem Zierelement, wobei der Clip (3) Rastnasen (8, 9, 10) aufweist, an denen das Bauteil (4) befestigbar ist,
**dadurch gekennzeichnet,**
**daß** eine Rastnase (8) eindrückbar ist.

2. Clip nach Anspruch 1, **dadurch gekennzeichnet, daß** das Bauteil (4) an dem Clip (3) lösbar befestigbar ist.

3. Clip nach Anspruch 1 oder 2, **gekennzeichnet durch** einen Anschlag (15) zur Begrenzung des Eindrückwegs der Rastnase (8).

4. Clip nach einem der vorhergehenden Ansprüche, **dadurch gekennzeichnet, daß** der Clip (3) an der Seitenscheibe (1) befestigbar ist.

5. Clip nach Anspruch 4, **dadurch gekennzeichnet, daß** der Clip (3) mit der Seitenscheibe (1) verklebbar (17) ist.

6. Clip nach einem der vorhergehenden Ansprüche, **dadurch gekennzeichnet, daß** der Clip (3) Anschläge (19, 20) für die Seitenscheibe (1) und/oder für einen Rahmen (2) der Seitenscheibe (1) aufweist.

7. Clip nach einem der vorhergehenden Ansprüche, **dadurch gekennzeichnet, daß** der Clip (3) federnde Anschläge (23, 24) für die Karosserie (18) aufweist.

8. Clip nach einem der vorhergehenden Ansprüche, **dadurch gekennzeichnet, daß** der Clip (3) im Bereich der Rastnasen (8, 9, 10) vorgespannt ist.

9. Clip nach einem der vorhergehenden Ansprüche, **dadurch gekennzeichnet, daß** das Bauteil (4) eine Verlängerung der Scheibe (1) bildet.

10. Kraftfahrzeug-Seitenscheibe mit einem Rahmen (2),
**gekennzeichnet durch**
einen Clip (3) nach einem der Ansprüche 1 bis 9.

11. Kraftfahrzeug-Seitenscheibe nach Anspruch 10, **dadurch gekennzeichnet, daß** der Rahmen (2) durch eine Umspritzung der Seitenscheibe (1) hergestellt ist.

12. Kraftfahrzeug-Seitenscheibe nach Anspruch 10 oder 11, **dadurch gekennzeichnet, daß** der Rahmen (2) Freimachungen (31) für den Clip (3) aufweist.

13. Kraftfahrzeug-Seitenscheibe nach einem der Ansprüche 10 bis 12, **dadurch gekennzeichnet, daß** der Rahmen (2) Ausnehmungen (32, 33) für Anschläge (19, 20) des Clips (3) aufweist.

14. Kraftfahrzeug-Seitenscheibe nach einem der Ansprüche 10 bis 13, **gekennzeichnet durch** ein Bauteil (4), vorzugsweise ein Zierelement.

15. Kraftfahrzeug-Seitenscheibe nach Anspruch 14, **dadurch gekennzeichnet, daß** der Rahmen (2) unter dem Bauteil (4) hindurchgeführt ist.

16. Kraftfahrzeug-Seitenscheibe nach Anspruch 14 oder 15, **dadurch gekennzeichnet, daß** an dem Rahmen (2) ein Anschlag (29) für das Bauteil (4) vorgesehen ist.

## Claims

1. Clip for connection of a vehicle side window (1) to a component (4), preferably a trim element, the clip (3) having latching lugs (8, 9, 10) to which the component (4) can be fastened, **characterized in that** one latching lug (8) can be pressed in.

2. Clip according to Claim 1, **characterized in that** the component (4) can be fastened releasably to the clip (3).

3. Clip according to Claim 1 or 2, **characterized by** a stop (15) for limiting the press-in distance of the latching lug (8).

4. Clip according to one of the preceding claims, **characterized in that** the clip (3) can be fastened to the side window (1).

5. Clip according to Claim 4, **characterized in that** the clip (3) can be adhesively bonded (17) to the side window (1).

6. Clip according to one of the preceding claims, **characterized in that** the clip (3) has stops (19, 20) for the side window (1) and/or for a frame (2) of the side window (1).

7. Clip according to one of the preceding claims, **characterized in that** the clip (3) has resilient stops (23, 24) for the vehicle body (18).

8. Clip according to one of the preceding claims, **characterized in that** the clip (3) is prestressed in the region of the latching lugs (8, 9, 10).

9. Clip according to one of the preceding claims, **characterized in that** the component (4) forms an extension of the window (1).

10. Motor vehicle side window with a frame (2), **characterized by** a clip (3) according to one of Claims 1 to 9.

11. Motor vehicle side window according to Claim 10, **characterized in that** the frame (2) is produced by encapsulation of the side window (1) by injection moulding.

12. Motor vehicle side window according to Claim 10 or 11, **characterized in that** the frame (2) has clearances (31) for the clip (3).

13. Motor vehicle side window according to one of Claims 10 to 12, **characterized in that** the frame (2) has recesses (32, 33) for stops (19, 20) of the clip (3).

14. Motor vehicle side window according to one of Claims 10 to 13, **characterized by** a component (4), preferably a trim element.

15. Motor vehicle side window according to Claim 14, **characterized in that** the frame (2) is guided under the component (4).

16. Motor vehicle side window according to Claim 14 or 15, **characterized in that** a stop (29) for the component (4) is provided on the frame (2).

## Revendications

1. Clip de raccordement d'une vitre latérale de véhicule (1) avec un composant (4), de préférence un élément décoratif, où le clip (3) présente des ergots d'encliquetage (8, 9, 10) auxquels le composant (4) peut être fixé,
**caractérisé**
**en ce qu'**un ergot d'encliquetage (8) peut être enfoncé.

2. Clip selon la revendication 1, **caractérisé en ce que** le composant (4) peut être fixé amoviblement au clip (3).

3. Clip selon la revendication 1 ou 2, **caractérisé par** une butée (15) pour limiter le trajet d'enfoncement de l'ergot d'encliquetage (8).

4. Clip selon l'une des revendications précédentes, **caractérisé en ce que** le clip (3) peut être fixé à la vitre latérale (1).

5. Clip selon la revendication 4, **caractérisé en ce que** le clip (3) peut être assemblé par collage (17) avec la vitre latérale (1).

6. Clip selon l'une des revendications précédentes, **caractérisé en ce que** le clip (3) présente des butées (19,20) pour la vitre latérale (1) et/ou pour un cadre (2) de la vitre latérale (1).

7. Clip selon l'une des revendications précédentes, **caractérisé en ce que** le clip (3) présente des butées élastiques (23,24) pour la carrosserie (18).

8. Clip selon l'une des revendications précédentes, **caractérisé en ce que** le clip (3) est précontraint dans la zone des ergots d'encliquetage (8, 9, 10).

9. Clip selon l'une des revendications précédentes, **caractérisé en ce que** le composant (4) constitue un prolongement de la vitre (1).

10. Vitre latérale de véhicule avec un cadre (2),
**caractérisée par** un clip (3) selon l'une des revendications 1 à 9.

11. Vitre latérale de véhicule selon la revendication 10, **caractérisée en ce que** le cadre (2) est formé par un moulage de projection tout autour de la vitre latérale (1).

12. Vitre latérale de véhicule selon la revendication 10 ou 11, **caractérisée en ce que** le cadre (2) présente des dégagements (31) pour le clip (3).

13. Vitre latérale de véhicule selon l'une des revendications 10 à 12, **caractérisée en ce que** le cadre (2) présente des évidements (32,33) pour les butées (19,20) du clip (3).

14. Vitre latérale de véhicule selon l'une des revendications 10 à 13, **caractérisée par** un composant (4), de préférence un élément décoratif.

15. Vitre latérale de véhicule selon la revendication 14, **caractérisée en ce que** le cadre (2) est amené à passer sous le composant (4).

16. Vitre latérale de véhicule selon la revendication 14 ou 15, **caractérisée en ce qu'**une butée (29) pour le composant (4) est prévue au cadre (2).
